# FASCICULE DE BREVET EUROPEEN

(11) **EP 1 549 933 B1**
(45) Date de publication et mention de la délivrance du brevet: **14.12.2016**
(21) Numéro de dépôt: 03773825.9
(22) Date de dépôt: 20.08.2003
(51) Int. Cl.: G01N 21/15, G01N 21/71

(54) **PROCEDE ET DISPOSITIF DE SPECTROSCOPIE D'EMISSION OPTIQUE D'UN LIQUIDE EXCITE PAR LASER**
VERFAHREN UND VORRICHTUNG ZUR OPTISCHEN EMISSIONSSPEKTROSKOPIE FÜR DIE DIREKTANALYSE VON LASERANGEREGTEN FLÜSSIGKEITEN
METHOD AND DEVICE FOR SPECTROSCOPY OF THE OPTICAL EMISSION OF A LIQUID EXCITED BY A LASER

(30) Priorité: 24.09.2002 FR 0211766
(43) Date de publication de la demande: 06.07.2005
(73) Titulaire: Commissariat à l'Énergie Atomique et aux Énergies Alternatives, 75015 Paris (FR); COMPAGNIE GENERALE DES MATIERES NUCLEAIRES, 78140 Velizy Villacoublay (FR)
(72) Inventeur: FICHET, Pascal, F-78300 Poissy (FR); LACOUR, Jean-Luc, F-91140 Villebon sur Yvette (FR); RIVOALLAN, Annie, F-91140 Villebon sur Yvette (FR)
(74) Mandataire: Moutard, Pascal Jean
(86) Numéro de dépôt international: PCT/FR2003/050033
(87) Numéro de publication internationale: WO 2004/029598

(56) Documents cités:
- WO-A-02/063284
- US-A- 5 583 634
- ARAGON C ET AL: "DETERMINATION OF CARBON CONTENT IN MOLTEN STEEL USING LASER-INDUCED BREAKDOWN SPECTROSCOPY" APPLIED SPECTROSCOPY, THE SOCIETY FOR APPLIED SPECTROSCOPY. BALTIMORE, US, vol. 47, no. 5, 1 mai 1993 (1993-05-01), pages 606-608, XP000363249 ISSN: 0003-7028
- RUSAK D A ET AL: "FUNDAMENTALS AND APPLICATIONS OF LASER-INDUCED BREAKDOWN SPECTROSCOPY" CRITICAL REVIEWS IN ANALYTICAL CHEMISTRY, CRC PRESS INC., BOCA RATON, FL, US, vol. 27, no. 4, 1997, pages 257-290, XP001090876 ISSN: 1040-8347

## Description

La présente invention se rapporte à un procédé et à un dispositif de spectroscopie d'émission optique d'un liquide excité par laser.

On sait que l'analyse d'un composé par spectroscopie d'émission optique peut utiliser un apport d'énergie appliqué sur le composé analysé au moyen d'un faisceau laser engendrant des radiations propres aux divers composants du composé, permettant ainsi d'identifier ces derniers et leurs concentrations respectives.

Plus précisément, cet apport d'énergie produit un plasma, constitué des éléments chimiques présents dans le composé analysé, dont le rayonnement lumineux est constitué de raies de fréquences propres à la nature des composants tandis que leur intensité est déterminée par la concentration de ces derniers.

Un tel procédé permet d'effectuer des analyses rapides, la détermination de la concentration de plusieurs éléments dans le liquide étant effectuée de façon simultanée.

De plus, elle nécessite une préparation minimale du composé et elle permet d'obtenir une résolution d'analyse pour détecter des composants à des concentrations allant jusqu'à la particule par million (ppm).

Par ailleurs, ce procédé permet de générer un minimum d'effluents ou de déchets, seule la faible quantité de composé ayant été analysé devant être considérée pour son recyclage ou son élimination.

Toutefois, une telle analyse est complexe lorsque le composé analysé est modifié physiquement par l'impact du faisceau laser. Il en est ainsi lorsque le composé est un liquide et que le faisceau laser est appliqué à sa surface, comme décrit dans le document [1] intitulé « Panoramic laser-induced breakdown spectro-metry of water », de MM. Charfi et Harith, publié dans Spectrochimica Acta Part B : Atomic Spectroscopy, le 31 juillet 2002, vol. 57, n° 7, pp. 1141 à 1153.

De fait, comme indiqué dans ce document, l'impact d'une impulsion du faisceau laser à la surface d'un liquide produit, d'une part, des éclaboussures qui atténuent, par opacité, les impulsions suivantes du faisceau lumineux et qui sont polluantes pour le système optique mesurant les rayonnements résultant de l'interaction, et, d'autre part, des vaguelettes et ondes de choc à la surface du liquide analysé, qui défocalisent le faisceau.

Or de telles éclaboussures arrêtent l'essentiel de l'énergie lumineuse avant qu'elle n'interagisse avec le jet de liquide à analyser, ce qui provoque des modifications des émissions optiques mesurées alors même que la composition du liquide analysé est constante.

De leur côté, les vaguelettes et ondes de choc à la surface du liquide à analyser défocalisent le faisceau laser, ce qui modifie aussi le rayonnement émis par la surface d'impact du faisceau lumineux sur ce liquide.

En d'autres termes, les éclaboussures hors du jet et les perturbations de la surface augmentent l'écart mesuré entre des analyses successives, réduisant par conséquent la justesse de l'analyse.

Pour limiter ces inhomogénéités, il est possible, comme décrit dans le document précédemment cité, d'optimiser les conditions de manipulation en inclinant le faisceau laser par rapport à la surface du liquide de façon à limiter l'impact du faisceau sur la surface.

De plus, une faible fréquence de répétition ou récurrence, de l'ordre de 0,2 Hz, est utilisée pour limiter à nouveau les vaguelettes à la surface du liquide analysé, alors que les analyses sur des solides, qui ne rencontrent pas ces problèmes, s'effectuent à des fréquences de récurrence de 10 à 20 Hz.

De tels problèmes de surface peuvent perturber des analyses telle que celle citée par Nai-Ho Cheung et Edward S. Yeung, dans le document [2] intitulé « Distribution of sodium and potassium within individual human erythrocytes by pulsed-laser vaporization in a shealth flow », publié dans Analytical Chemistry 1994, 66, pp. 929 à 936.

Dans ce document, il est proposé un dispositif 100 (figure 1) permettant d'analyser par excitation ou ablation laser couplée à la spectroscopie d'émission optique le liquide 110 issu d'une cellule, ce liquide présentant l'inconvénient d'être disponible en trop faible quantité pour permettre une focalisation correcte du faisceau laser sur sa surface.

Pour permettre l'analyse de ce liquide 110, ce dernier est transmis par capillarité dans un conduit 112 venant au contact des parois d'un conduit de plus grande dimension 114, ce deuxième conduit 114 transmettant un liquide 116 qui transporte le liquide 110 issu de la cellule.

Le conduit 112 amène le liquide 110 analysé contre la paroi du conduit 114 de telle sorte que, par capillarité, le liquide 110 analysé se situe à la surface du liquide 116 issu du conduit 114.

Ainsi, une analyse des composés situés à la surface du liquide 118, mélange du liquide 110 et 116, conduit à une analyse du liquide 110.

Pour effectuer une analyse de liquide sans subir les inconvénients précédemment mentionnés, il est connu de générer le plasma rayonnant à l'intérieur du liquide analysé comme décrit par David A. Cremers, Leon J. Radziemski, Thomas R. Loree dans le document [3] intitulé « Apparatus and method for spectrochemical analysis of liquids using the laser spark », dans le brevet américain n° 4,925,307 publié le 15 mai 1990.

Dans ce document, ses auteurs mentionnent les inconvénients précédemment cités vis-à-vis de l'analyse d'un liquide, propres à la focalisation du rayon laser sur la surface de ce dernier et proposent l'analyse de ce liquide en générant à l'aide d'un premier laser un plasma à l'intérieur du liquide à traiter, c'est-à-dire en focalisant le rayon laser au sein du liquide.

Dans un second temps un second laser focalisé dans le plasma génère l'émission lumineuse dont l'analyse spectroscopique constitue la mesure.

Un tel procédé présente l'inconvénient de requérir un positionnement précis des optiques et une synchronisation complexe des faisceaux laser.

En d'autres termes, ce procédé requiert une parfaite stabilité mécanique du système et présente une complexité et un coût élevés.

Par ailleurs, il est connu que l'analyse par spectroscopie d'émission optique à partir d'une excitation laser peut être améliorée lorsque le produit analysé, c'est-à-dire recevant le faisceau laser, est dans un environnement gazeux spécifique.

Par exemple, dans le document [4] intitulé « Détermination of colloidal iron in water by laser-induced breakdown spectroscopy » présenté par Yoshiro Ito, Osamu Ueki, Susumu Nakamura dans Analytica Chimica Acta 299 (1995), pp. 401-405, les auteurs comparent les propriétés de l'environnement en hélium, air ou argon d'un liquide pour améliorer la spectroscopie des émissions issues d'une excitation par faisceau laser de ce dernier.

Dans ce document, les auteurs cités décrivent l'utilisation d'un dispositif 200 (figure 2) comprenant un conduit 202 d'un liquide 206 qui est postérieurement entouré par un gaz 208 dont l'effet sur l'émission des raies, issues du plasma généré par laser dans le liquide 206, est étudié. Le faisceau laser est orthogonal à la surface de ce liquide.

En faisant s'écouler le liquide à analyser sous forme de jet, ce dispositif permet au faisceau laser de frapper à chaque impulsion laser une partie différente de ce liquide, ce qui limite l'effet des vaguelettes et ondes de choc.

De plus, les analyses sont réalisées sans problème de contamination de parois du contenant des cellules puisque le liquide n'est analysé qu'à la sortie du conduit.

Conformément à ce document, il est apparu qu'un environnement en argon (Ar) ou en hélium (He) avait différents effets sur l'intensité des signaux, l'argon augmentant l'intensité de ces derniers tandis que l'hélium la diminuait.

Ce document divulgue aussi que la température du plasma, importante pour la qualité et la justesse du signal analysé, pouvait être maintenue élevée malgré une basse conductivité thermique du gaz environnant.

L'invention résulte de la constatation que dans toutes les techniques antérieures décrites ci-dessus, le plasma résultant de l'interaction d'une impulsion du faisceau laser avec le jet de liquide à analyser projette violemment dans toutes les directions et à très grande vitesse des micro-gouttelettes qui interfèrent avec l'impulsion suivante de ce laser, ce qui perturbe fortement les mesures et nuit à la justesse de l'analyse.

En effet, des micro-gouttelettes de liquide étant en suspension autour du plasma formé par un premier faisceau laser, elles perturbent une nouvelle utilisation du faisceau laser sur la surface.

Dès lors, les diverses impulsions du faisceau laser appliquées sur la surface du liquide sont atténuées de façon erratique par le nuage de micro-goutelettes projetées par une impulsion précédente, et des analyses consécutives du liquide présentent des écarts provoqués par ces micro-gouttelettes. En d'autres termes, la répétabilité et la justesse des analyses sont limitées par ces micro-gouttelettes.

La présente invention vise à remédier à cet inconvénient.

Plus précisément, l'invention consiste en un procédé de spectroscopie d'émission optique d'un liquide excité par un laser impulsionnel focalisé sur sa surface, caractérisé en ce que la zone d'analyse est balayée par un écoulement laminaire de gaz ayant une vitesse et une section suffisantes pour éliminer les résidus du plasma en suspension dans le gaz résultant d'une première impulsion laser avant que ne survienne l'impulsion laser suivante.

Le gaz a ainsi une fonction de balayage des résidus d'un précédent plasma, et aussi de contention du liquide dont la surface se trouve stabilisée, ce qui contribue aussi à la répétabilité des analyses.

Il est à noter que l'état de la technique pris en considération dans la présente demande est le document WO 02/063284 qui décrit un procédé de spectroscopie d'émission optique d'un liquide excité par un laser impulsionnel dans lequel la zone d'analyse est balayée par un écoulement de gaz ayant une vitesse et une section suffisantes pour éliminer les résidus du plasma en suspension dans le gaz et résultant d'une première impulsion laser avant que ne survienne l'impulsion laser suivante. Dans ce document, le dispositif comporte un laser pour générer des impulsions de lumière cohérente, une lentille pour focaliser le faisceau laser à la surface d'un bain liquide, et des moyens de détection comportant un spectromètre. Une pompe permet de faire circuler un liquide depuis un réservoir vers une cellule d'analyse. Un flux de gaz passe au-dessus du liquide, sur le trajet du faisceau laser.

Par ailleurs, l'environnement gazeux étant déterminé, et la focalisation des rayons lumineux étant effectuée, aucune modification de l'optique ou de la disposition de l'installation n'est plus nécessaire, même lors d'un changement de liquide à analyser, sauf, le cas échéant, si l'un de ces liquides présente une viscosité très différente des autres. Cette absence de réglage en cours d'analyses augmente la répétabilité et la reproductibilité des analyses.

De plus, il est préférable que le gaz d'élimination des résidus soit choisi parmi les gaz qui améliorent le rayonnement émis lors de l'analyse.

L'invention concerne ainsi un procédé de spectroscopie d'émission optique d'un liquide excité par un laser impulsionnel focalisé sur sa surface, qui présente les caractéristiques correspondant à la revendication 1 du brevet.

La vitesse du gaz est déterminée en fonction d'au moins une des caractéristiques suivantes du liquide analysé : sa température, sa viscosité, son débit, la nature turbulente ou laminaire de son écoulement.

La section balayée par l'écoulement laminaire du gaz est déterminée en fonction d'au moins une des caractéristiques suivantes : vitesse d'expansion du plasma, cadence de récurrence des impulsions laser, justesse de la mesure.

De préférence, le liquide est en écoulement dans la zone d'analyse.

Dans une réalisation, le gaz est conduit dans la zone d'analyse par un conduit entourant le conduit du liquide analysé.

Le gaz utilisé est, par exemple, de l'argon ou de l'hélium.

Le rayonnement émis par le plasma d'interaction entre le liquide à analyser et le faisceau laser est, dans une réalisation préférée, recueilli colinéairement au faisceau laser.

La zone d'analyse et les moyens pour générer un jet du liquide à analyser et un jet de gaz l'entourant peuvent être déportés dans une enceinte étanche apte à contenir des produits dangereux ou un environnement hostile, et de les confiner. Dans ce cas, la colinéarité du rayonnement émis par le plasma d'interaction entre le liquide à analyser et le faisceau laser est particulièrement avantageuse car elle permet d'utiliser un seul hublot pour l'enceinte.

De préférence, le faisceau laser est incliné par rapport au plan formé par la surface du fluide analysé d'un angle distinct de 90 degrés.

Il est préférable que, lorsque le liquide est en écoulement, le point d'impact du faisceau laser sur le jet soit proche de la sortie du liquide d'un conduit. Par exemple, cette distance est comprise entre 5 et 15 mm pour l'eau. En effet, après une certaine distance dépendant de la vitesse d'écoulement du liquide, le jet devient instable puis diverge.

L'invention concerne aussi un dispositif de spectroscopie d'émission optique d'un liquide excité par un laser impulsionnel focalisé sur la surface de ce liquide, qui présente les caractéristiques définies par la revendication 10 du brevet.

Selon une réalisation, le moyen apte à recueillir la lumière d'émission du liquide à analyser est tel que cette lumière est recueillie colinéairement au faisceau laser d'excitation,
- et le dispositif comporte une enceinte étanche dans laquelle se trouvent le liquide à analyser et les moyens aptes à générer le jet laminaire de gaz,
- la colinéarité du faisceau laser d'excitation et de la direction de la lumière recueillie permettant l'utilisation d'un seul hublot de l'enceinte pour le faisceau laser et la lumière recueillie.

D'autres caractéristiques et avantages de l'invention apparaîtront avec la description détaillée d'une réalisation effectuée ci-dessous, à titre d'exemple non limitatif, en se référant aux figures ci-jointes sur lesquelles :
- les figures 1 et 2, déjà décrites, représentent des dispositifs connus d'analyse par spectroscopie d'émission optique utilisant une excitation laser,
- la figure 3 représente en détail une cellule d'ablation, c'est à dire un dispositif d'analyse par spectroscopie d'émission optique utilisant une excitation laser, conforme à l'invention, et
- la figure 4 représente une réalisation du dispositif montré sur la figure 3.

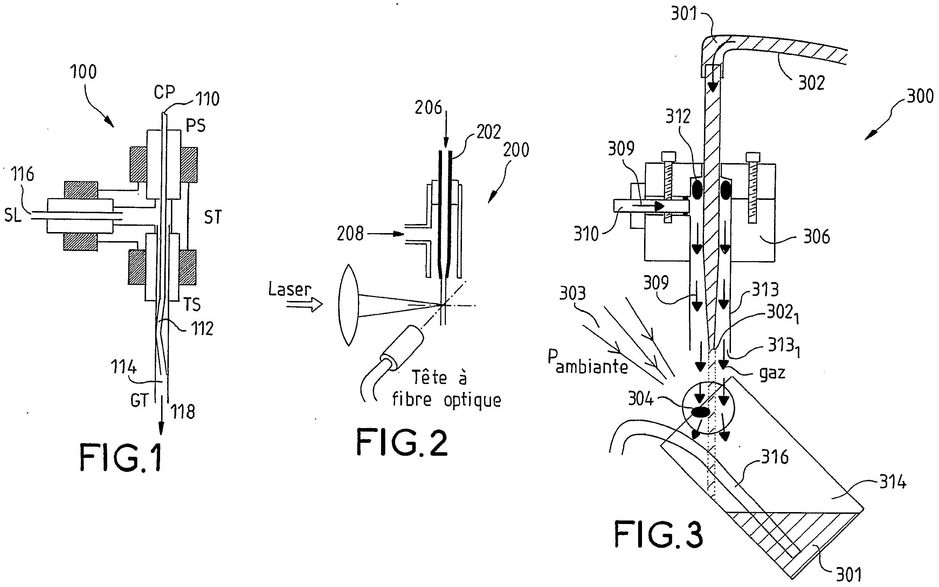

Le dispositif 300 décrit ci-dessous à l'aide de la figure 3 permet la réalisation d'un procédé , conforme à l'invention, d'analyse d'un liquide 301 par spectroscopie d'émission optique générée au moyen d'un faisceau 303 laser focalisé sur la surface du liquide 301.

A cet effet, on confère à un gaz 309 disposé dans la zone d'analyse 304 comprenant cette surface de liquide des propriétés de vitesse et débit telles qu'on minimise les perturbations générées par l'impact du faisceau laser sur la surface du liquide. La vitesse et le débit du gaz 309 doivent présenter des valeurs suffisamment élevées pour éliminer les micro-goutellettes ; cependant, cette vitesse et ce débit ne doivent pas dépasser une limite pour ne pas perturber l'écoulement du jet liquide. Pour régler la vitesse et le débit, on agit sur la pression du gaz alimentant le dispositif.

La cellule d'ablation 300, qui peut être déportée dans une enceinte susceptible de contenir et confiner un environnement hostile, comprend un conduit 302 dirigeant le liquide 301 à analyser vers une zone 304 d'analyse, c'est-à-dire une zone comprenant la surface du liquide 301 sur laquelle est focalisée un faisceau laser ultérieurement décrit.

Ce conduit 302 de liquide traverse un support 306 de raccordement à un conduit d'arrivée 310 de gaz 309, tel que de l'azote ou de l'argon. Ce support 306 permet de répartir le gaz 309 tout autour du conduit de liquide 302, et de le faire sortir par un conduit 313 de même axe que le conduit 302 et l'entourant. Ce conduit 313 débouche par un orifice 313₁ de diamètre D₁, et le conduit de liquide 302 débouche par un orifice 302₁ de diamètre D₂. A l'intérieur du support 306, des moyens d'étanchéité 312 sont disposés entre celui-ci et le conduit de liquide 302, à un niveau situé entre l'arrivée de ce conduit 302 dans le support et le conduit d'arrivée 310, afin de contraindre le gaz à s'échapper vers la zone 304 d'analyse.

Le conduit 302 est une pipette Pasteur ayant un orifice de sortie 302₁ d'un diamètre D₂ de 0,1 mm, et dont le conduit 313 est un tube de diamètre intérieur D₁ 10 mm.

La vitesse et le débit (dans l'exemple la pression) du gaz 309 ne doivent pas dépasser la limite au delà de laquelle ce gaz ferait dévier ou fluctuer le jet du fluide 301 à analyser dans la zone 304 d'analyse, ce qui défocaliserait le faisceau laser et ferait perdre à l'analyse sa justesse. Il est aisé de déterminer expérimentalement ce seuil pour chaque couple liquide à analyser / gaz. Par exemple, lorsque le liquide à analyser est de l'eau et le gaz de l'air ou de l'azote, la limite est de 1 bar.

Lorsque le liquide est de l'eau et le gaz de l'air ou de l'azote, cet effet est obtenu en alimentant le conduit d'arrivée 310 de gaz sous une pression P_{gaz} supérieure à la pression P_{ambiante} ambiante de 0,15 à 1 bar, et préférentiellement de 0,2 bar.

Cet effet de balayage doit être adapté aux caractéristiques physiques de la solution et du gaz, et notamment de sa viscosité. Ainsi par exemple si le liquide à analyser est une huile ayant une viscosité cinématique à 100°F de 67,6 cst et le gaz est de l'air ou de l'azote, la pression requise dans le conduit d'arrivée 310 de gaz doit atteindre 0,4 bar au dessus de l'ambiante.

Lorsque la pression du gaz vérifie ces conditions, ce gaz stabilise le jet par un effet de contention, et éloigne de la zone 304 d'analyse les micro-gouttelettes formées autour du plasma, de telle sorte que ces dernières ne perturbent pas l'action du laser sur le liquide lors de l'arrivée d'une nouvelle impulsion lumineuse, ce qui est significatif dès que ces impulsions sont séparées de moins d'une seconde.

Une telle réduction des perturbations a permis d'améliorer le rapport signal sur bruit d'environ un facteur 100 par rapport à une utilisation du gaz à pression ambiante. Cette amélioration se répercute, selon les modalités choisies par l'opérateur, soit en une forte amélioration de la justesse et la répétabilité des mesures pour une même cadence de répétition des impulsions laser, soit en une forte amélioration de la cadence de répétition des impulsions laser, dans la mesure où le laser le permet, soit en une amélioration simultanée, mais moins importante, de chacun de ces paramètres.

Dans la zone 304 d'analyse, le gaz 309 en écoulement laminaire élimine les micro-gouttelettes en suspension après l'impact d'une impulsion du faisceau laser et stabilise la surface du liquide 301 à analyser.

Enfin, le dispositif décrit dans cet exemple présente des dispositions connues dans des contextes proches. En particulier, on sait que, pour un liquide au repos, le faisceau laser peut être incliné par rapport à la surface de ce liquide d'un angle différent de 90°, de façon à limiter les perturbations engendrées par le faisceau laser. Dans l'exemple, cet angle est supérieur à 60° et inférieur à 90°.

De plus, le liquide analysé étant en écoulement dans la zone d'analyse, les bulles formées dans le liquide par le faisceau laser sont éloignées de cette zone par l'écoulement.

Dans cette réalisation, le liquide 301 est recueilli dans un récipient 314, muni d'un conduit 316 dont une extrémité est introduite dans le liquide 301, en début de manipulation.

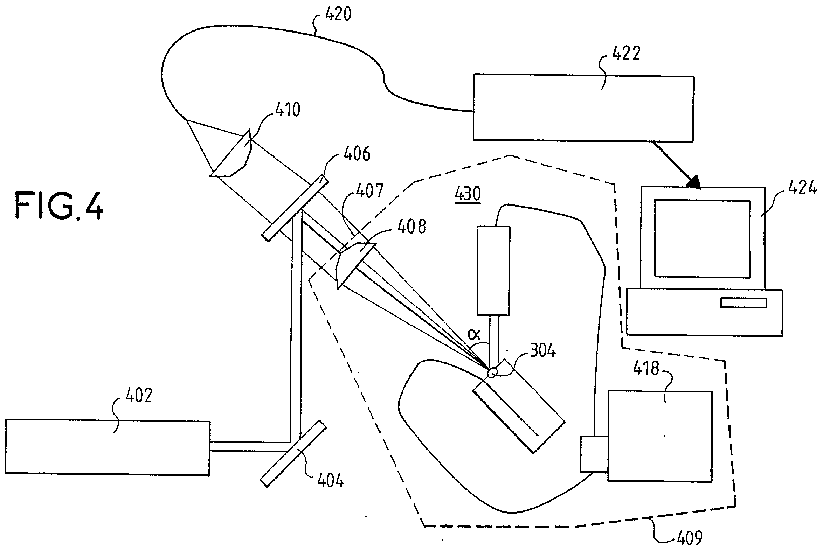

Le conduit 316 est relié à une pompe 418 (figure 4), de telle sorte qu'il est possible de recycler le fluide 301 de façon à n'utiliser qu'une quantité limitée de liquide pour effectuer les analyses.

En outre, la focalisation du laser et du système optique d'enregistrement des émissions peut être fixée pendant l'ensemble des analyses. Dès lors, le dispositif d'analyse est particulièrement stable, améliorant à nouveau la répétabilité des analyses.

Comme précédemment indiqué, le gaz 309 permet d'obtenir un plasma très reproductible et stable. On peut ainsi utiliser des fréquences de répétition ou récurrence pour le laser de 10 à 20 Hz, voire plus, pendant un délai de plusieurs minutes. Ceci permet d'obtenir des temps d'accumulation spectroscopique élevés, et donc d'améliorer le rapport signal sur bruit.

Le dispositif représenté sur la figure 4 comporte un laser 402, émettant à la longueur d'onde fondamentale de 1064 nm, auquel on adjoint un doubleur de fréquence ramenant cette longueur d'onde à 532 nm. Il comporte aussi un miroir dichroïque en verre 404, un miroir dichroïque en quartz 406 et une optique convergente 408 pour diriger et focaliser le faisceau laser sur la surface du liquide analysé dans la zone 304 d'analyse.

Dans cet exemple, le laser 402 est un laser Nd-YAG de longueur d'onde 1064 nm ramenée à 532 nm par un doubleur de fréquence, et émettant des impulsions d'une durée de sept nanosecondes. Toute valeur d'impulsion de l'ordre de 2 à 30ns convient également tant que la puissance spécifique délivrée sur le jet à analyser est au moins de 1 Gw/cm².

Étant donnée la suppression dans le gaz des résidus du plasma précédent et la stabilisation de la surface du liquide à analyser, le laser peut fonctionner à une fréquence de récurrence de dix ou de vingt Hertz de façon à effectuer un nombre important d'analyses pendant un temps donné, améliorant ainsi la reproductibilité de cette analyse.

Par ailleurs, il convient de signaler que le miroir dichroïque en quartz 406 permet de transmettre les raies analytiques dans le domaine ultraviolet.

Le rayonnement émis par le plasma dans cette zone d'analyse est guidé jusqu'à un faisceau de fibres optiques 420, pouvant se réduire à une seule fibre optique, par l'optique convergente 408 formée d'une simple lentille, le miroir 406 puis une optique convergente 410 formée aussi d'une simple lentille. On peut aussi utiliser des faisceaux de fibres appelés transformateurs de section fente /"bundle", qui permettent de recueillir une tache lumineuse approximativement circulaire, et de l'appliquer quasiment sans déperdition à la fente d'entrée d'un spectromètre. Le matériau de ces fibres doit permettre la transmission de toutes les raies émises par le liquide à analyser.

Le faisceau de fibres optiques 420 est ici réduit à une seule fibre, en silice, d'un millimètre de diamètre et d'une dizaine de mètres de longueur.

Contrairement au dispositif de l'art antérieur (figure 2), cette fibre recueille le spectre d'interaction rayonné par le plasma suivant le même axe que le faisceau laser incident sur la zone 304, ce qui contribue à stabiliser le signal. En effet, cette colinéarité permet de maintenir l'existence du signal si la position du point d'impact du faisceau laser varie sous l'effet du plasma.

Cette caractéristique maximise la lumière recueillie lorsque le faisceau laser n'est pas orthogonal à la surface du liquide. En outre, elle favorise l'utilisation du dispositif dans des environnements hostiles, comme le vide ou un environnement nucléaire, en raison de la possibilité de faire passer le faisceau laser d'excitation et le spectre lumineux recueilli à travers un seul et unique hublot 407 de l'enceinte 409 de protection et de confinement représentée en traits interrompus.

L'application aux solutions radioactives utilisées dans l'industrie de l'énergie nucléaire constitue une application privilégiée. Dans ce cas, cette enceinte 409 représente les parois d'une « cellule chaude » de l'industrie nucléaire, et le hublot 407 est préférentiellement en quartz.

La collecte de la lumière au moyen d'une fibre optique permet de travailler de façon déportée et évite à l'utilisateur du dispositif de se trouver à proximité de la zone où sont manipulées les solutions radioactives (ou toxiques, ou difficiles d'accès). Ainsi, dans le cas où l'analyse concerne des produits dangereux ou doit être effectuée en environnement hostile, il est possible de déporter dans le milieu hostile la cellule d'ablation 430, délimitée par le trait 409 sur la figure 4, tout en maintenant le reste du dispositif dans un environnement sûr pour les opérateurs.

La possibilité d'effectuer des analyses de diverses solutions sans effectuer de réglage entre ces solutions est alors particulièrement avantageuse. Une focalisation directe sur le spectromètre serait possible mais plus compliquée à régler.

Ce rayonnement est alors analysé par un spectromètre 422, tel qu'un spectromètre à géométrie Czerny Turner ou un spectromètre dit à échelle, relié à un ordinateur 424 enregistrant les spectres d'émission pour traiter ces données.

Le spectromètre à géométrie Czerny Turner permet, avec un réglage optimal, de balayer une gamme spectrale allant de 250 nm à 650 nm avec une fenêtre spectrale accessible en simultanée de 4 nm.

Le spectromètre à échelle possède la même résolution que le spectromètre à géométrie Czerny Turner, mais sa fenêtre spectrale, avec le réglage choisi, couvre une gamme de longueurs d'onde allant de 200 à 850 nm.

Un tel spectromètre à échelle, muni d'une caméra à "CCD", précédée d'un intensificateur de lumière, peut être calibré au démarrage puisqu'aucune partie mobile n'est présente dans le détecteur.

Dans ce cas, un générateur d'impulsions permet de déclencher une fenêtre temporelle de mesure du rayonnement enregistré par la caméra avec un retard choisi par rapport à l'impulsion laser.

Le spectromètre 422 est commandé à l'aide de l'ordinateur 424 qui est muni d'un logiciel d'acquisition de données et de traitement.

L'analyse de solutions diverses est d'une grande importance dans de très nombreux domaines industriels, tels que l'industrie pharmaceutique, l'électronique, l'industrie énergétique et les environnements hostiles. Une des applications privilégiées étant l'analyse de solutions radioactives dans les processus de l'énergie nucléaire.

## Revendications

1. Procédé de spectroscopie d'émission optique d'un liquide (301) excité par un laser impulsionnel (402) focalisé sur sa surface, dans lequel la zone d'analyse (304) est balayée par un écoulement de gaz (309) ayant une vitesse et une section suffisantes pour éliminer les résidus du plasma en suspension dans le gaz et résultant d'une première impulsion laser, avant que ne survienne l'impulsion laser suivante **caractérisé en ce que** l'écoulement de gaz est laminaire, parallèle à la surface du liquide à analyser, en contact avec la surface de ce liquide, et réalise un effet de contention de la surface libre du liquide.

2. Procédé selon la revendication 1, la vitesse du gaz étant déterminée en fonction d'au moins une des caractéristiques suivantes du liquide analysé : sa température, sa viscosité, son débit, la nature turbulente ou laminaire de son écoulement.

3. Procédé selon l'une des revendications 1 ou 2, la section balayée par l'écoulement laminaire du gaz étant déterminée en fonction d'au moins une des caractéristiques suivantes : vitesse d'expansion du plasma, cadence de récurrence des impulsions laser, justesse de la mesure.

4. Procédé selon l'une des revendications précédentes, le liquide étant en écoulement dans la zone d'analyse.

5. Procédé selon l'une des revendications précédentes, le gaz étant conduit dans la zone d'analyse par un conduit (313, 302) entourant le conduit (302) du liquide analysé.

6. Procédé selon l'une des revendications précédentes, le faisceau laser étant incliné par rapport au plan formé par la surface du liquide d'un angle distinct de 90 degrés.

7. Procédé selon la revendication 6, le faisceau laser étant incliné par rapport au plan formé par la surface du liquide d'un angle supérieur à 60 degrés.

8. Procédé selon l'une des revendications précédentes, le faisceau émis par le liquide suite à l'excitation par le faisceau laser étant recueilli colinéairement au faisceau laser.

9. Procédé selon l'une des revendications précédentes, le gaz étant de l'argon ou de l'hélium.

10. Dispositif de spectroscopie d'émission optique d'un liquide excité par un laser impulsionnel focalisé sur la surface de ce liquide, comportant en combinaison :
- un laser apte à générer des impulsions de lumière cohérente d'une densité de puissance d'au moins 1 Gw/cm²,
- des moyens aptes à générer un jet du liquide à analyser laminaire sur une longueur d'au moins un centimètre,
- des moyens aptes à générer un jet laminaire de gaz parallèle à la surface du liquide à analyser et en contact avec elle, pour éliminer les résidus du plasma en suspension dans le gaz et résultant d'une première impulsion laser,
- des moyens aptes à focaliser le faisceau laser dans la zone d'analyse, sur la surface du jet de liquide à analyser,
- un moyen apte à recueillir la lumière résultant de l'interaction des impulsions lumineuses du laser avec le jet du liquide à analyser,
- un spectroscope apte à fonctionner dans la plage de fréquences où se trouvent les raies d'émission du liquide à analyser, et agencé de manière à recevoir la lumière d'interaction recueillie par le faisceau de fibres optiques,
- des moyens aptes à faire circuler le liquide à analyser sous forme de jet, et
- des moyens aptes à faire circuler sous forme de jet le gaz devant s'écouler tangentiellement au liquide à analyser.

11. Dispositif selon la revendication 10, le moyen apte à recueillir la lumière d'émission du liquide à analyser étant tel que cette lumière est recueillie colinéairement au faisceau laser d'excitation,
- le dispositif comportant une enceinte étanche dans laquelle se trouvent le liquide à analyser et les moyens aptes à générer le jet laminaire de gaz,
- la colinéarité du faisceau laser d'excitation et de la direction de la lumière recueillie permettant l'utilisation d'un seul hublot de l'enceinte pour le faisceau laser et la lumière recueillie.

## Patentansprüche

1. Verfahren zur optischen Emissionsspektroskopie einer Flüssigkeit (301), die durch einen auf ihre Oberfläche fokussierten Pulslaser (402) angeregt wird, wobei die Analysezone (304) durch einen Gasstrom (309) gefegt wird, der eine ausreichende Geschwindigkeit und Querschnitt aufweist, um die Reste des Plasmas in Suspension in dem Gas und resultierend aus einem ersten Laserpuls zu beseitigen, bevor der folgende Laserpuls auftritt, **dadurch gekennzeichnet, dass** der Gasstrom laminar, parallel zu der Oberfläche der zu analysierenden Flüssigkeit und in Kontakt mit der Oberfläche dieser Flüssigkeit ist und einen Einschlusseffekt der freien Oberfläche der Flüssigkeit bewirkt.

2. Verfahren nach Anspruch 1, wobei die Geschwindigkeit des Gases als Funktion wenigstens einer der nachfolgenden Eigenschaften der analysierten Flüssigkeit bestimmt wird: ihre Temperatur, ihre Viskosität, ihre Rate, die turbulente oder laminare Art ihrer Strömung.

3. Verfahren nach einem der Ansprüche 1 oder 2, wobei der durch laminare Strömung des Gases gefegte Querschnitt als Funktion wenigstens einer der nachfolgenden Eigenschaften bestimmt wird: Ausdehnungsgeschwindigkeit des Plasmas, Wiederholungsfrequenz der Laserpulse, Genauigkeit der Messung.

4. Verfahren nach einem der vorhergehenden Ansprüche, wobei die Flüssigkeit in der Analysezone in Strömung ist.

5. Verfahren nach einem der vorhergehenden Ansprüche, wobei das Gas durch eine Leitung (313, 302) in die Analysezone geleitet wird, die die Leitung (302) der analysierten Flüssigkeit umgibt.

6. Verfahren nach einem der vorhergehenden Ansprüche, wobei der Laserstrahl bezüglich der durch die Oberfläche der Flüssigkeit gebildeten Ebene um einen von 90 Grad verschiedenen Winkel geneigt ist.

7. Verfahren nach Anspruch 6, wobei der Laserstrahl bezüglich der durch die Oberfläche der Flüssigkeit gebildeten Ebene um einen Winkel von mehr als 60 Grad geneigt ist.

8. Verfahren nach einem der vorhergehenden Ansprüche, wobei der von der Flüssigkeit in Folge einer Anregung durch den Laserstrahl emittierte Strahl kollinear zum Laserstrahl aufgefangen wird.

9. Verfahren nach einem der vorhergehenden Ansprüche, wobei das Gas Argon oder Helium ist.

10. Vorrichtung zur optischen Emissionsspektroskopie einer Flüssigkeit, die durch einen auf die Oberfläche dieser Flüssigkeit fokussierten Pulslaser angeregt wird, umfassend in Kombination:
- einen Laser, der dazu ausgelegt ist, Pulse von kohärentem Licht mit einer Leistungsdichte von wenigstens 1 Gw/cm² zu erzeugen,
- Mittel, die dazu ausgelegt sind, einen laminaren Strahl der zu analysierenden Flüssigkeit über eine Länge von wenigstens einem Zentimeter zu erzeugen,
- Mittel, die dazu ausgelegt sind, einen laminaren Strahl von Gas parallel zur Oberfläche der zu analysierenden Flüssigkeit und in Kontakt mit ihr zu erzeugen, um die Reste des Plasmas in Suspension in dem Gas und resultierend aus einem ersten Laserpuls zu beseitigen,
- Mittel, die dazu ausgelegt sind, den Laserstrahl in der Analysezone auf der Oberfläche des Strahls von zu analysierender Flüssigkeit zu fokussieren,
- eine Einrichtung, die dazu ausgelegt ist, das aus der Wechselwirkung der Lichtpulse des Lasers mit dem Strahl von zu analysierender Flüssigkeit resultierende Licht aufzufangen,
- ein Spektroskop, das dazu ausgelegt ist, in dem Frequenzbereich zu arbeiten, in dem sich die Emissionslinien der zu analysierenden Flüssigkeit befinden, und dazu ausgelegt ist, das durch den Strahl von optischen Fasern aufgefangene Wechselwirkungslicht zu empfangen,
- Mittel, die dazu ausgelegt sind, die zu analysierende Flüssigkeit in Form eines Strahls zirkulieren zu lassen, und
- Mittel, die dazu ausgelegt sind, das Gas, das tangential zu der zu analysierenden Flüssigkeit strömen soll, in Form eines Strahls zirkulieren zu lassen.

11. Vorrichtung nach Anspruch 10, wobei die Einrichtung, die dazu ausgelegt ist, das Emissionslicht der zu analysierenden Flüssigkeit aufzufangen, derart ausgelegt ist, dass dieses Licht kollinear zu dem Anregungslaserstrahl aufgefangen wird,
- wobei die Vorrichtung eine dichte Umhüllung umfasst, in der sich die zu analysierende Flüssigkeit und die Mittel befinden, die dazu ausgelegt sind, den laminaren Strahl von Gas zu erzeugen,
- wobei die Kollinearität des Anregungslaserstrahls und der Richtung des aufgefangenen Lichts die Verwendung eines einzigen Fensters in der Umhüllung für den Laserstrahl und das aufgefangene Licht erlaubt.

## Claims

1. Method for the optical emission spectroscopy of a liquid (301) excited by a pulsed laser (402) focused on its surface, in which the zone to be analyzed (304) is swept by a gas flow (309) having sufficient velocity and cross sectional area to eliminate the residues of the plasma suspended in the gas and resulting from a first pulsed laser, before the next pulsed laser takes place, **characterized in that** the gas flow is laminar, parallel to the surface of the liquid to be analyzed, in contact with the surface of this liquid and creates a contention effect of the free surface of the liquid.

2. Method in accordance with claim 1, the velocity of the gas being determined according to at least one of the following properties of the analyzed liquid: its temperature, its viscosity, its flow rate, the turbulent or laminar nature of its flow.

3. Method in accordance with one of the claims 1 or 2, the cross sectional area swept by the laminar gas flow being determined according to at least one of the following properties: rate of expansion of the plasma, rate of recurrence of the laser pulses, accuracy of the measurement.

4. Method in accordance with one of the above claims, the liquid being flowing in the zone of analysis.

5. Method in accordance with one of the preceding claims, the gas being led into the zone of analysis through a conduit (313, 302) surrounding the conduit (302) of the analyzed liquid.

6. Method in accordance with one of the preceding claims, the laser beam being inclined in relation to the plane formed by the surface of the liquid at an angle different from 90°.

7. Method in accordance with claim 6, the laser beam being inclined in relation to the plane formed by the surface of the liquid at an angle greater than 60°.

8. Method in accordance with one of the preceding claims, the beam emitted by the liquid after excitation by the laser beam being collected colinearly with the laser beam.

9. Method in accordance with one of the above claims, the gas being argon or helium.

10. Device for the optical emission spectroscopy of a liquid excited by a pulsed laser focused on the surface of this liquid, comprising in combination:
a laser capable of generating coherent light pulses, of a power density of at least 1 Gw/cm2,
means capable of generating a jet of the liquid to be analyzed over a length of at least one cm,
means capable of generating a laminar gas jet parallel to the surface of the liquid to be analyzed and in contact with it, to eliminate the residues of the plasma suspended in the gas and resulting from a first laser pulse,
means capable of focusing the laser beam in the zone of analysis, on the surface of the liquid jet to be analyzed,
means capable of collecting the light resulting from the interaction of the laser light pulses with the liquid jet to be analyzed,
a spectroscope capable of operating within the range of frequencies at which are found the emission lines of the liquid to be analyzed, and being equipped so as to receive the interaction light collected by the beam of optical fibers,
means capable of making the liquid to be analyzed circulate in the form of a jet, and
means capable of making circulate in the form of a jet the gas which must flow tangentially to the liquid to be analyzed.

11. Device in accordance with claim 10 the means capable of collecting the emission light of the liquid to be analyzed being such that this light is collected colinearly with the excitation laser beam,
the device comprising an impermeable enclosure in which are found the liquid to be analyzed and the means capable of generating the laminar gas jet,
the colinearity of the excitation laser beam and the direction of the collected light making possible the use of only one port of the enclosure for the laser beam and the collected interaction light.
